(19) Europäisches Patentamt
European Patent Office
Office européen des brevets

(11) EP 4 435 017 A1

(12) **EUROPEAN PATENT APPLICATION**
published in accordance with Art. 153(4) EPC

(43) Date of publication:
**25.09.2024 Bulletin 2024/39**

(21) Application number: **22896029.0**

(22) Date of filing: **15.11.2022**

(51) International Patent Classification (IPC):
***C08F 110/06*** *(2006.01)* ***C08F 4/659*** *(2006.01)*
***C08F 4/646*** *(2006.01)*

(52) Cooperative Patent Classification (CPC):
**C08F 4/646; C08F 4/659; C08F 110/06;**
Y02P 20/52

(86) International application number:
**PCT/KR2022/018009**

(87) International publication number:
**WO 2023/090823 (25.05.2023 Gazette 2023/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.11.2021 KR 20210159382**

(71) Applicant: **Korea Petrochemical Ind. Co., Ltd**
**Seoul 03035 (KR)**

(72) Inventors:
- **KIM, Younghwan**
  **Ulsan 44465 (KR)**
- **KANG, Kapku**
  **Ulju-gun Ulsan 44922 (KR)**
- **YOO, Myeongyeol**
  **Ulsan 44669 (KR)**
- **HONG, Jinho**
  **Ulsan 44460 (KR)**
- **HA, Yunsun**
  **Ulju-gun Ulsan 44959 (KR)**
- **PARK, Yoonhyun**
  **Ulsan 44662 (KR)**
- **SON, Hojin**
  **Ulju-gun Ulsan 44932 (KR)**
- **HA, Hyun Soo**
  **Ulsan 44708 (KR)**

(74) Representative: **Caspary, Karsten et al**
**Kroher-Strobel**
**Rechts- und Patentanwälte PartmbB**
**Bavariaring 20**
**80336 München (DE)**

# (54) METHOD FOR MANUFACTURING ULTRA-HIGH MOLECULAR WEIGHT POLYPROPYLENE

(57) The present invention relates to a method for producing an ultra-high molecular weight polypropylene having a viscosity average molecular weight of 1,000,000 g/mol or greater and a low inorganic content of 30 ppm or less. According to the method for producing an ultra-high molecular weight polypropylene of the above disclosure, there is the effect that the molecular weight control for producing an ultra-high molecular weight propylene can be achieved with an input ratio of a main catalyst, a co-catalyst and a promoter even if hydrogen used as a molecular weight regulator in general polymerization conditions is not added.



Processed by Luminess, 75001 PARIS (FR)

## Description

### Technical Field

The present invention relates to a method for producing an ultra-high molecular weight polypropylene, and in particular, to a method for producing an ultra-high molecular weight polypropylene through molecular weight regulation according to an input ratio of titanium tetrachloride, alkyl aluminum, and an external electron donor in the preparation of the ultra-high molecular weight polypropylene, and an ultra-high molecular weight polypropylene produced thereby containing a trace amount of inorganic material through a catalyst residue removal process.

### Background Art

In general, polypropylene polymerization is performed by using magnesium chloride as a carrier, titanium chloride containing phthalate, di-ether, and succinate compounds as an internal electron donor as a main catalyst, alkyl aluminum as a co-catalyst, and a silicon compound containing an alkoxy group as a promoter, which is an external electron donor, and the polymerization is performed within a reactor such as slurry polymerization, bulk polymerization, or gas phase polymerization. At this time, hydrogen is used as a molecular weight regulator to regulate the molecular weight of the polymerized polypropylene, and all polypropylenes to be currently produced and supplied have Melt Index (MI) of 0.1 to 1,500 g/10 min under a load of 2,16 kg by the method suggested byASTM D-1238.

The produced polypropylenes are applied to a variety of applications such as films, fibers, automobile interior and exterior materials, pipes, etc., and the melting point and density may be controlled by controlling MI or injecting comonomers according to the application.

Although these various applications are possible, the development of an ultra-high molecular weight polypropylene is required due to the development of processing technology and the need for materials suitable for discovering new uses, so as to have more improved mechanical properties and new applications, but there are limitations in a method for producing a polypropylene resin with a higher level of molecular weight only by a controlling method according to the injected amount of hydrogen.

[Prior art references]

[Patent references]

(Patent Reference 1) European Patent EP 3157966B1
(Patent Reference 2) U.S. Patent US 8008417B

## Disclosure

### Technical Problem

In order to solve the problems described above, an object of the present invention is to provide an ultra-high molecular weight polypropylene that has a high molecular weight of 1,000,000 g/mol or greater and a high catalytic activity based on a viscosity average molecular weight through changes in polymerization temperature and pressure by controlling selection of a main catalyst and a ratio of main catalysts, co-catalysts, promoters, etc., in a method for producing an ultra-high molecular weight polypropylene.

Another object of the present invention is to provide an ultra-high molecular weight polypropylene that has a lower level of inorganic content and an average particle diameter of 400 μm or less in order to improve the performance of a capacitor film and a secondary battery separator in a method for producing an ultra-high molecular weight polypropylene.

### Solution to Problem

To achieve the above objectives, the present invention includes a method for producing an ultra-high molecular weight polypropylene characterized by controlling a ratio of a main catalyst (a) which is a titanium compound, a co-catalyst (b) which is an alkyl aluminum compound, and a promoter (c) which is a silicon compound, polymerization temperature, and polymerization pressure without adding hydrogen which is a molecular weight regulator to produce an ultra-high molecular weight polypropylene of 1,000,000 g/mol or greater.

Here, Al in the co-catalyst, which is the alkyl aluminum compound, may be included in 10 to 500 moles with respect to 1 mole of Ti in the main catalyst, which is the titanium compound.

Here, Si in the promoter, which is the silicon compound, may be included in 1 to 40 moles with respect to 1 mole of Ti in the main catalyst, which is the titanium compound.

Here, the polymerization temperature may be 30 to 90°C.

Here, the polymerization pressure may be 1 to 40 bar.

Here, the method for producing the ultra-high molecular weight polypropylene may further include mixing a polar organic solvent (x) with the produced ultra-high molecular weight polypropylene, and separating, purifying and drying the mixture using distilled water (y) or filtered water (y'), in order to remove catalyst residues in the produced ultra-high molecular weight polypropylene.

Here, the polar organic solvent (x) may be any one or more compounds selected from a group consisting of a compound of Chemical Formula (4) below and a compound of Chemical Formula (5) below:

R-OH Chemical Formula (4)

HO-R1-R2-OH Chemical Formula (5)

(In Chemical Formula (4) above, R may be a linear or branched alkyl group having 1 to 12 carbon atoms, and the Chemical Formula (4) may be any one or more compounds selected from a group consisting of methanol, ethanol, propanol, butanol, pentanol, hexanol, heptanol, octanol, nonanol, decanol, undecanol, dodecanol, and branched alkyl groups such as isopropanol, isobutanol, and isopentanol.

In Chemical Formula (5) above, R1 and R2 may be linear alkyl groups having 1 to 6 carbon atoms, and the Chemical Formula (5) may be any one or more compounds selected from a group consisting of methanediol, ethanediol, propanediol, butanediol, pentanediol, hexanediol, heptanediol, octanediol, nonanediol, decanediol, undecanediol, and dodecanediol.)

Here, 10 to 1000 parts by weight of the polar organic solvent (x) may be mixed with respect to 100 parts by weight of the produced ultra-high molecular weight polypropylene.

Here, 100 to 3000 parts by weight of the distilled water (y) or filtered water (y') may be used with respect to 100 parts by weight of the polar organic solvent (x).

In another general aspect, to achieve the above objectives, the present invention further describes an ultra-high molecular weight polypropylene produced according to the method for producing an ultra-high molecular weight polypropylene and having a viscosity average molecular weight of 1,000,000 g/mol or greater.

Here, the viscosity average molecular weight of the ultra-high molecular weight polypropylene may be 1,000,000 to 4,000,000 g/mol.

Here, the ultra-high molecular weight polypropylene may have an inorganic content of 30 ppm or less.

Here, the ultra-high molecular weight polypropylene may have a particle diameter of 400 μm or less.

**Effects of Invention**

According to the method for producing the ultra-high molecular weight polypropylene of the present invention as described above, there is the effect that the molecular weight regulation for producing an ultra-high molecular weight propylene can be achieved with an input ratio of a main catalyst, a co-catalyst and a promoter even if hydrogen used as a molecular weight regulator in general polymerization conditions is not added.

In addition, the ultra-high molecular weight polypropylene produced according to the present invention contains a lower level of inorganic materials than polypropylene resins generally produced through a catalyst residue removal process to have physical properties suitable for secondary battery separators and uses requiring insulation.

In addition, according to the method for producing the ultra-high molecular weight polypropylene of the present invention, it is possible to produce an ultra-high molecular weight polypropylene separator having excellent performance and a heterogeneous separator of ultra-high molecular weight polyethylene and ultra-high molecular weight polypropylene by improving the kneading property and melting rate with the ultra-high molecular weight polyethylene used in secondary battery separators through particle diameter control.

## Best mode for Implementation of the Invention

The terms used herein are intended to describe embodiments and are not intended to limit the present invention. In the present specification, a singular form also includes a plural form unless specifically stated in the text. As used in the specification, "comprises" and/or "made of" do not preclude the presence or addition of one or more other components, steps, operations and/or elements mentioned.

Unless otherwise defined, all terms used in the present specification may be used in a meaning commonly understood by those skilled in the art to which the present invention pertains. In addition, terms defined in commonly used dictionaries are not ideally or excessively interpreted unless clearly and specifically defined.

The present inventors have completed the present invention by confirming that an ultra-high molecular weight polypropylene having a viscosity average molecular weight of 1,000,000 g/mol or greater according to the present invention as follows. Meanwhile, the term "ultra-high molecular weight" as used herein means a viscosity average molecular weight of 1,000,000 g/mol or greater.

### <Method for producing ultra-high molecular weight polypropylene>

The present inventors have devised the following invention as a result of research to solve the above problems. In the present specification, there is described a method for producing an ultra-high molecular weight polypropylene characterized by controlling a ratio of a main catalyst (a) which is a titanium compound, a co-catalyst (b) which is an alkyl aluminum compound, and a promoter (c) which is a silicon compound, polymerization temperature, and polymerization pressure without adding hydrogen which is a molecular weight regulator to produce an ultra-high molecular weight polypropylene of 1,000,000 g/mol or greater.

In addition, in order to achieve the above-mentioned object, the present invention provides a method for producing an ultra-high molecular weight polypropylene including performing a polymerization reaction by using a main catalyst having high stereoregularity and adding a content of a co-catalyst and an optimal content of an external electron donor capable of initiating the catalyst and minimizing the separation of a molecular main chain.

More specifically, the present invention provides a method for molecular weight regulation of an ultra-high molecular weight polypropylene according to an input ratio of the main catalyst, the co-catalyst and the promoter.

The method for producing the ultra-high molecular weight polypropylene of the present invention is as follows, for each step process of:

(x) mixing and adding a co-catalyst b, a main catalyst a and a promoter c in the presence of a hydrocarbon solvent containing 1 to 20 carbon atoms in a reactor;
(y) adding propylene d to the mixed solution obtained in step (x) under an atmosphere of a temperature of 30°C, and performing a polymerization reaction while maintaining the temperature of 30 to 90°C; and
(z) filtering polypropylene resin powder from a slurry reaction solution obtained after performing steps (x) and (y), and drying the obtained polypropylene resin powder.

Here, step (x) is preferably performed under a nitrogen atmosphere. That is, step (x) is preferably performed in the presence of inert gas.

In the method for producing the ultra-high molecular weight polypropylene of the present invention, the hydrocarbon solvent including 1 to 20 carbon atoms in step (x) may include at least any one selected from the group consisting of aliphatic hydrocarbon solvents such as pentane, hexane, cyclohexane, methyl cyclohexane, heptane, octane, decane, undecane, dodecane, tridecane or tetradecane; aromatic hydrocarbon solvents such as benzene, toluene, xylene or ethyl benzene; and halogenated hydrocarbon solvents such as dichloropropane, dichloroethylene, trichloroethylene, carbon tetrachloride or chlorobenzene. In addition, the method may also be performed by gas phase polymerization or bulk polymerization under high pressure of propylene without hydrocarbons.

In the method for producing the ultra-high molecular weight polypropylene of the present invention, representative examples of the co-catalyst b in step (x) may include at least any one compound selected from a group consisting of triethylaluminum, trimethylaluminum, triisobutylaluminum, trioctylaluminum, diethylaluminum chloride, diethylaluminum bromide, diethylaluminum iodide, diethylaluminum fluoride, ethylaluminum dichloride, dimethylaluminum chloride, metalaluminum dichloride, and ethylaluminum sesquichloride.

In step (x), the co-catalyst (b) is preferably added in an amount of 5 to 500 moles per 1 mole of the main catalyst (a), more specifically added in an amount of 10 to 500 moles, and most preferably added in an amount of 100 to 500 moles, but is not limited thereto. More specifically, it is preferable that Al in the co-catalyst (b), which is an alkyl aluminum compound, is included in 5 to 500 moles with respect to 1 mole of Ti in the main catalyst (a), which is a titanium compound. For example, if Al in the co-catalyst (b), which is the alkyl aluminum compound, is less than 5 moles with respect to 1 mole of Ti in the main catalyst (a), which is the titanium compound, there may be a problem in that the polymerization

reaction does not sufficiently occur. On the contrary, if Al of the co-catalyst (b), which is the alkyl aluminum compound, is more than 500 moles with respect to 1 mole of Ti in the main catalyst (a), which is the titanium compound, even if the polymerization reaction occurs, the ultra-high molecular weight polypropylene with a viscosity average molecular weight of 1,000,000 g/mol or greater may be not sufficiently produced.

In addition, in step (x), the main catalyst (a) is a Ziegler-Natta-based titanium chloride catalyst containing a silicon compound containing phthalate, di-ether, and succinate as an internal electron donor, and magnesium chloride as a carrier, and suitably titanium trichloride or titanium tetrachloride, and a catalyst that provides high stereoregularity depending on a type of internal electron donor is more preferable, and generally, commercially available catalysts may be used.

In addition, in step (x), the promoter (c) may be used with any one or more compounds selected from the group consisting of a compound of the following Chemical Formula (1), a compound of the following Chemical Formula (2), and a compound of the following Chemical Formula (3).

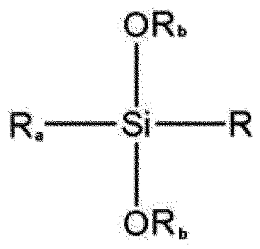

Chemical Formula (1)

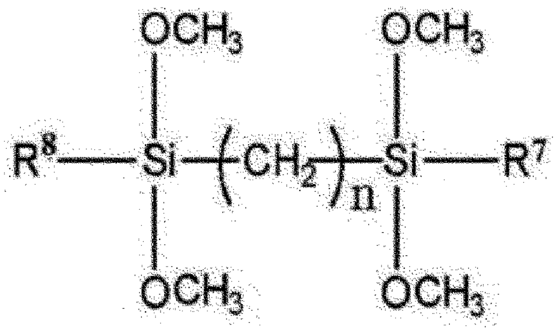

Chemical Formula (2)

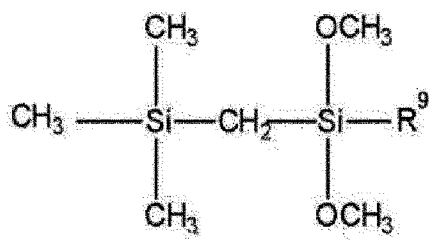

Chemical Formula (3)

In Chemical Formulas (1) to (3),

Ra, R7, R8 and R9 are each independently an alkyl group, cycloalkyl group, aryl group, allyl group or vinyl group having 1 to 12 carbon atoms, Rb is an alkyl group or aryl group having 1 to 6 carbon atoms, R is an alkyl group, cycloalkyl group, aryl group, or allyl group having 1 to 12 carbon atoms, or -ORc, in which Rc is an alkyl group or aryl group having 1 to 6 carbon atoms, and n is an integer of 0 to 6.

Specifically, representative examples of the compound of Chemical Formula (1) may include any one or more compounds selected from the group consisting of cyclohexylmethyldimethoxy silane (CMCD), cyclohexyl-n-propyldimethoxy silane (CPDM), cyclohexyl-i-propyldimethoxy silane (CIPDM), cyclohexyl-n-butyldimethoxy silane (CBDM), cyclohexyl-i-butyldimethoxy silane (CIBDM), cyclohexyl-n-hexyldimethoxy silane (CHDM), cyclohexyl-n-octyldimethoxy silane (CODM), cyclohexyl-n-decyldimethoxy silane (CDeDM), dimethyldimethoxy silane, dimethyldiethoxy silane, dicyclopentyldimethoxy silane, diisopropyldimethoxy silane, dicyclopentyldimethoxy silane, methylphenyldimethoxy silane, diphenyldiethoxy silane, methyltrimethoxy silane, ethyltrimethoxy silane, vinyltrimethoxy silane, phenyltrimethoxy silane, methyltriethoxy

silane, ethyltriethoxy silane, vinyltriethoxy silane, phenyltriethoxy silane, butyltriethoxy silane, ethyltriisopropoxy silane, vinyltributoxy silane, and methyltriaryloxy silane. Preferably, representative examples of the compound of Chemical Formula (1) may include any one or more compounds selected from the group consisting of dimethyldimethoxy silane, dimethyldiethoxy silane, dicyclopentyldimethoxy silane, cyclohexylmethyldimethoxy silane, diisopropyldimethoxy silane, dicyclopentyldimethoxy silane, methylphenyldimethoxy silane, diphenyldiethoxy silane, methyltrimethoxy silane, ethyltrimethoxy silane, vinyltrimethoxy silane, phenyltrimethoxy silane, methyltriethoxy silane, ethyltriethoxy silane, vinyltrimethoxy silane, phenyltriethoxy silane, butyltriethoxy silane, ethyltriisopropoxy silane, vinyltributoxy silane, and methyltriaryloxy silane.

Representative examples of the compound of Chemical Formula (2) may include any one or more compounds selected from the group consisting of 1,1,3,3-tetramethoxy-1,3-dimethyl-1,3-disilapropane (TMDMDP), 1,1,3,3-tetramethoxy-1-methyl-3-hexyl-1,3-disilapropane (TMMHDP), 1,1,3,3-tetramethoxy-1,3-di-n-hexyl-1,3-disilapropane (TMDHDP), 1,1,3,3-tetramethoxy-1-methyl-3-cyclohexyl-1,3-disilapropane (TMMCDP), 1,1,3,3-tetramethoxy-1,3-dicyclohexyl-1,3-disilapropane (TMDCDP), 1,1,8,8-tetramethoxy-1,8-dicyclohexyl-1,8-disilaoctane (TMDCDO), and 1,1,3,3-tetramethoxy-1,3-dimethyldisiloxane (TMDMDS).

Representative examples of the compound of Chemical Formula (3) may include any one or more compounds selected from the group consisting of methyl(trimethylsilylmethyl)dimethoxysilane (MTDM), n-propyl(trimethylsilylmethyl)dimethoxysilane (PTDM), i-propyl(trimethylsilylmethyl)dimethoxysilane (IPTDM), n-butyl(trimethylsilylmethyl)dimethoxysilane (BTDM), i-butyl(trimethylsilylmethyl)dimethoxysilane (IBTDM), n-pentyl(trimethylsilylmethyl)dimethoxysilane (PnTDM), n-hexyl(trimethylsilylmethyl)dimethoxy silane (HTDM), cyclopentyl (trimethylsilylmethyl)dimethoxysilane (CpTDM), and cyclohexyl(trimethylsilyl methyl)dimethoxysilane (CTDM).

In step (x), the promoter (c) is preferably added in an amount of 1 to 40 moles per 1 mol of the main catalyst (a), but is not limited thereto. More specifically, it is preferable that Si in the promoter, which is a silicon compound, is included in an amount of 1 to 40 moles with respect to 1 mole of Ti in the main catalyst, which is a titanium compound. For example, if Si in the promoter, which is the silicon compound, is less than 1 mole with respect to 1 mole of Ti in the main catalyst (a), which is the titanium compound, there may be a problem in that the polymerization reaction does not sufficiently occur. On the contrary, if Si in the promoter, which is the silicon compound, is more than 40 moles with respect to 1 mole of Ti in the main catalyst (a), which is the titanium compound, even if the polymerization reaction occurs, there may be a problem in that the ultra-high molecular weight polypropylene with a viscosity average molecular weight of 1,000,000 g/mol or greater may be not sufficiently obtained.

Meanwhile, in step (y), the polymerization temperature at which the polymerization reaction is performed by adding a propylene d to the mixed solution is preferably within the range of 30 to 90°C, but is not limited thereto. For example, if the polymerization temperature at which the polymerization reaction is performed is less than 30°C, there may be a problem in that the polymerization reaction does not sufficiently occur. Conversely, if the polymerization temperature at which the polymerization reaction is performed is more than 90°C, even if the polymerization reaction is performed, there may be a problem in that the ultra-high molecular weight polypropylene with a viscosity average molecular weight of 1,000,000 g/mol or greater may be not sufficiently obtained.

In addition, in step (y), the polymerization pressure at which the polymerization reaction is performed by adding the propylene (d) to the mixed solution is preferably within the range of 1 to 40 bar, but is not limited thereto. For example, if the polymerization pressure at which the polymerization reaction is performed is less than 1 bar, there may be a problem in that the polymerization reaction does not sufficiently occur. Conversely, if the polymerization pressure at which the polymerization reaction is performed is more than 40 bar, even if the polymerization reaction is performed, there may be a problem in that the ultra-high molecular weight polypropylene with a viscosity average molecular weight of 1,000,000 g/mol or greater may be not sufficiently obtained.

Meanwhile, the polymerization reaction performed in step (y) may be performed in liquid phase, slurry phase, bulk phase, or gas phase polymerization, but is not limited thereto.

**<Catalyst residue removal process>**

In addition, in order to achieve the above-mentioned object, the present invention provides a catalyst residue removal process along with the production of the ultra-high molecular weight polypropylene, and provides a method for removing inorganic materials such as magnesium, titanium, aluminum, and silicon that have been used as a catalyst in the polymerization process.

A method for removing catalyst residues in the ultra-high molecular weight polypropylene of the present invention includes the following steps. In order to remove catalyst residues in the ultra-high molecular weight polypropylene produced according to the present invention, the method may further include mixing a polar organic solvent (x) with the produced ultra-high molecular weight polypropylene, and separating, purifying and drying the mixture using distilled water (y) or filtered water (y').

More specifically, the method may include mixing the ultra-high molecular weight polypropylene produced in

the present invention with a polar organic solvent; separating the produced ultra-high molecular weight polypropylene and the polar organic solvent through contact with water; and drying the separated ultra-high molecular weight polypropylene.

At this time, the mixing ratio of the produced ultra-high molecular weight polypropylene and the polar organic solvent may be added and mixed with 0,1 to 10 times higher the polar organic solvent than the weight of the produced ultra-high molecular weight polypropylene, preferably 0,5 to 3 times higher the polar organic solvent than the weight of the produced ultra-high molecular weight polypropylene.

That is, it is preferable to mix 10 to 1000 parts by weight of the polar organic solvent (x) with respect to 100 parts by weight of the produced ultra-high molecular weight polypropylene, and it is more preferable to mix 30 to 300 parts by weight of the polar organic solvent (x) with respect to 100 parts by weight of the produced ultra-high molecular weight polypropylene.

The polar organic solvent used to remove the catalyst residues in the ultra-high molecular weight polypropylene produced in the present invention may be a compound of the following Chemical Formula (4).

R-OH Chemical Formula (4)

HO-R1-R2-OH Chemical Formula (5)

In the Chemical Formula (4), R is a linear or branched alkyl group having 1 to 12 carbon atoms. Specifically, representative examples of the compound corresponding to Chemical Formula (4) may include one or more compounds selected from the group consisting of linear alkyl groups such as methanol, ethanol, propanol, butanol, pentanol, hexanol, heptanol, octanol, nonanol, decanol, undecanol, and dodecanol, and branched alkyl groups such as isopropanol, isobutanol, and isopentanol.

In the Chemical Formula (5), R1 and R2 are linear alkyl groups having 0 to 6 carbon atoms. Specifically, representative examples of the compound corresponding to Chemical Formula (5) may include one or more compounds selected from the group consisting of methanediol, ethanediol, propanediol, butanediol, pentanediol, hexanediol, heptanediol, octanediol, nonanediol, decanediol, undecanediol, and dodecanediol.

The water used to separate the polar organic solvent in which the catalyst residue has been dissolved from the produced ultra-high molecular weight polypropylene may be distilled water or filtered water, and may be used in an amount of 1 to 30 times greater than the weight of the used polar organic solvent, preferably 5 to 20 times greater than the weight of the used polar organic solvent.

That is, it is preferred to use 100 to 3000 parts by weight of distilled water (y) or filtered water (y') based on 100 parts by weight of the polar organic solvent (x), and it is more preferred to use 500 to 2000 parts by weight of distilled water (y) or filtered water (y') based on 100 parts by weight of the polar organic solvent (x). The mixed material of the produced ultra-high molecular weight polypropylene and the polar organic solvent is in contact with water and then layer-separated. Here, the molecular polar organic solvent is mixed into a water layer, and the produced ultra-high molecular weight polypropylene floats in the upper layer of water, the floating matter may be separated using filter paper or a filter, and then dried in a dryer at 90 to 105°C to obtain an ultra-high molecular weight polypropylene from which inorganic materials such as magnesium, titanium, aluminum, and silicon, which have been used as catalysts in the polymerization process, have been removed.

**<Particle diameter control of ultra-high molecular weight polypropylene>**

In order to achieve the above-mentioned purpose, in the present invention, the particle diameter of the ultra-high molecular weight polypropylene may be controlled by controlling the particle diameter and degree of polymerization of a catalyst. The particle diameter and particle shape of the ultra-high molecular weight polypropylene are determined by the particle diameter or particle size of the main catalyst used when polymerizing the ultra-high molecular weight polypropylene. In particular, since the particle diameter is determined by the degree of polymerization, in order to secure the particle diameter required according to a processing method of the ultra-high molecular weight polypropylene, there is provided a method of controlling the degree of polymerization, and selecting polymerization conditions such as polymerization pressure, polymerization temperature, and polymerization time that affect the degree of polymerization, and the particle diameter of the used main catalyst.

The degree of polymerization mentioned above is inversely proportional to polymerization pressure and polymerization time, and accordingly, it is possible to ensure an ultra-high molecular weight polypropylene resin with a small particle diameter due to a low degree of polymerization when lowering the polymerization pressure and shortening the polymerization time. As the particle diameter of the main catalyst is smaller, a resin having a smaller particle diameter may be ensured at the same degree of polymerization, so that it is possible to select a catalyst having appropriate particle diameter and particle size distribution to secure desired particle diameter and particle size of the resin.

**<Ultra-high molecular weight polypropylene produced according to the present invention>**

Meanwhile, the present specification further discloses an ultra-high molecular weight polypropylene, which is produced by the method for producing the ultra-high molecular weight polypropylene of the present invention.

The ultra-high molecular weight polypropylene of the present invention produced according to the method for producing ultra-high molecular weight polypropylene of the present invention has a viscosity average molecular weight of preferably 1,000,000 to 4,000,000 g/mol, and more preferably 1,000,000 to 2,500,000 g/mol, under conditions in which hydrogen is not added or a trace amount of hydrogen is added, preferably under conditions in which hydrogen is not added.

In addition, the ultra-high molecular weight polypropylene of the present invention may maintain an inorganic content of 30 ppm or less through the catalyst residue removal process as described above. More specifically, the inorganic content of the ultra-high molecular weight polypropylene according to the present invention is preferably 1 to 30 ppm, and more preferably 5 to 20 ppm.

In addition, the ultra-high molecular weight polypropylene of the present invention may maintain a particle size of 400 μm or less by controlling the particle diameter and the degree of polymerization of the catalyst as described above. More specifically, the particle diameter of the ultra-high molecular weight polypropylene according to the present invention is preferably 10 to 400 μm, and more preferably 30 to 300 μm.

In addition, in the method for producing the ultra-high molecular weight polypropylene of the present invention, it is possible to produce an ultra-high molecular weight polypropylene with an inorganic material of 30 ppm or less, which can be used as a secondary battery separator and an insulating material that require a low inorganic content through catalyst residue removal technology, and to produce ultra-high molecular weight polypropylene resin particles having a particle diameter of 400 μm or less, which is suitable for gel film, gel spinning, etc.

**Mode for Implementation of the Invention**

Hereinafter, the present specification to be claimed will be described in more detail with reference to the accompanying drawings and examples. However, the drawings, examples, etc. presented in the present specification can be modified in various ways by those skilled in the art to have various forms, and it should be understood that the description in the present specification does not limit the present invention to a specific disclosed form and includes all equivalents or substitutes included in the spirit and technical scope of the present invention. In addition, the accompanying drawings are presented to help those skilled in the art understand the present invention more accurately, and may be exaggerated or reduced compared to reality.

{Embodiments and evaluation}

<Experimental Example 1> Polymerization and physical property measurement of ultra-high molecular weight polypropylene resin

Embodiment 1.

A 2 L stainless steel reactor equipped with a stirrer was vacuumed at room temperature, injected with 900 ml of hexane as an organic solvent, and then stirred. At room temperature, 900 mg of triethylaluminum and 30 mg of dicyclopentyldimethoxy silane were added, and 30 mg of a Ziegler-Natta-based titanium catalyst was added as a main catalyst. Thereafter, a reactor was placed in a thermostat maintained at 70°C, and when the temperature was raised to 60°C, propylene was added up to 10 bar and polymerized for 2 hours. After completion of the reaction, unreacted propylene was vented, the reactor was opened to separate the organic solvent and the polymerized resin, and then the resin was dried in a dryer to obtain a polypropylene resin.

At this time, the catalyst content used, the catalyst activity, and the physical properties of the resin were measured and shown in Table 1 below.

Embodiment 2.

Embodiment 2 was performed in the same manner as Embodiment 1 except that the amount of triethylaluminum

added was decreased from 900 mg to 300 mg.

Embodiment 3.

Embodiment 3 was performed in the same manner as Embodiment 1 except that the amount of dicyclopentyldimethoxy silane added was increased from 30 mg to 90 mg.

Embodiment 4.

Embodiment 4 was performed in the same manner as Embodiment 1 except that 1240 mg of triisobutylaluminum was added instead of 900 mg of triethylaluminum.

Embodiment 5.

Embodiment 5 was performed in the same manner as Embodiment 4 except that the amount of triisobutylaluminum added was decreased from 1240 mg to 410 mg.

Embodiment 6.

Embodiment 6 was performed in the same manner as Embodiment 5 except that the amount of dicyclopentyldimethoxy silane added was increased from 30 mg to 90 mg.

Embodiment 7.

Embodiment 7 was performed in the same manner as Embodiment 1 except that 2290 mg of trioctylaluminum was added instead of 900 mg of triethylaluminum.

Embodiment 8.

Embodiment 8 was performed in the same manner as Embodiment 7 except that the amount of trioctylaluminum was added was decreased from 2290 mg to 760 mg.

Embodiment 9.

Embodiment 9 was performed in the same manner as Embodiment 8 except that the amount of dicyclopentyldimethoxy silane added was increased from 30 mg to 90 mg.

Embodiment 10.

Embodiment 10 was performed in the same manner as Embodiment 1 except that the amount of propylene added was adjusted from 10 bar to 3 bar.

Embodiment 11.

Embodiment 11 was performed in the same manner as Embodiment 3 except that the input temperature of the propylene was set to 40°C and the temperature of the constant temperature bath was fixed at 50°C.

Embodiment 12.

Embodiment 12 was performed in the same manner as Embodiment 3 except that the input temperature of the propylene was set to 25°C and the temperature of the constant temperature bath was fixed at 30°C.

Embodiment 13.

Embodiment 13 was performed in the same manner as Embodiment 3 except that hexane which is the organic solvent was not added and instead propylene was added to conduct polymerization under the saturated vapor pressure of propylene at 70°C and 32 bar.

Comparative Example 1.

Comparative Example 1 was performed in the same manner as Embodiment 1 except that 20 ml of hydrogen gas was added.

Comparative Example 2.

Comparative Example 2 was performed in the same manner as Comparative Example 1 except that 80 ml of hydrogen gas was added.

Comparative Example 3.

Comparative Example 3 was performed in the same manner as Embodiment 1 except that the amount of triethylaluminum added was decreased from 900 mg to 10 mg.

Comparative Example 4.

Comparative Example 4 was performed in the same manner as Embodiment 1 except that the amount of triethylaluminum added was increased from 900 mg to 1270 mg.

Comparative Example 5.

Comparative Example 5 was performed in the same manner as Embodiment 1 except that the amount of triethylaluminum added was increased from 900 mg to 1730 mg.

Comparative Example 6.

Comparative Example 6 was performed in the same manner as Embodiment 2 except that dicyclopentyldimethoxy silane added was decreased from 30 mg to 3 mg.

Comparative Example 7.

Comparative Example 7 was performed in the same manner as Embodiment 2 except that dicyclopentyldimethoxy silane added was increased from 30 mg to 150 mg.

Method for measuring physical properties of polypropylene resin

(1) Melt index (MI): A melt index was measured in kilograms (kg) under a condition of 230°C according to ASTM D-1238.

(2) Viscosity average molecular weight (Mv): A viscosity average molecular weight was measured by securing the intrinsic viscosity using an intrinsic viscosity measurement method defined by ASTM D-5020 and ISO 1628-3, and expressing the converted value using the Margolies Equation.

$$Mv = 5.37 \times 104 \times [\eta]^{1.49}$$

$\eta$: Intrinsic viscosity

(3) Catalytic activity: Catalytic activity was expressed as a value obtained by dividing the amount of polypropylene resin obtained after completion of polymerization by the amount of main catalyst added.

(4) Particle diameter: Particle diameter was measured using Malvern Mastersizer 2000, and an average particle diameter (D[0.5]) was indicated among the measured values.

(5) Inorganic content (Ash): The weight of the remaining amount was calculated and expressed after complete

combustion of 50 g of the obtained polypropylene resin.

Results of measuring physical properties of polypropylene resin

The physical property measurement results and polymerization reaction (polymerization process) conditions of polypropylenes prepared by main catalyst/co-catalyst/promoter ratio and produced including the catalyst residue removal process of Embodiments 1 to 13 and Comparative Examples 1 to 7 were shown in Table 1 below.

[Table 1]

| Classification | Propylene (bar) | Ti (mmol) | Al (mmol) | Si (mmol) | Polymerization temperature (°C) | hydrogen (ml) | Catalyst Activity (kg/gCat) | MI(g/10min (230°C, 21.6 kg)) | Mv (g/mol) | Average particle diameter ($\mu$m) |
|---|---|---|---|---|---|---|---|---|---|---|
| Embodiment 1 | 10 | 0.016 | 7.88 | 0.13 | 70 | 0 | 28.7 | 1.5 | 1.210,000 | 310 |
| Embodiment 2 | 10 | 0.016 | 2.63 | 0.13 | 70 | 0 | 23.8 | 0.8 | 1,560,000 | 237 |
| Embodiment 3 | 10 | 0.016 | 2.63 | 0.39 | 70 | 0 | 17.9 | 0.6 | 1,820,000 | 185 |
| Embodiment 4 | 10 | 0.016 | 7.88 | 0.13 | 70 | 0 | 25.3 | 1.2 | 1,450,000 | 258 |
| Embodiment 5 | 10 | 0.016 | 2.63 | 0.13 | 70 | 0 | 21.2 | 0.6 | 1,830,000 | 220 |
| Embodiment 6 | 10 | 0.016 | 2.63 | 0.39 | 70 | 0 | 13.5 | 0.4 | 1,990,000 | 180 |
| Embodiment 7 | 10 | 0.016 | 7.88 | 0.13 | 70 | 0 | 20.9 | 1 | 1,520,000 | 215 |
| Embodiment 8 | 10 | 0.016 | 2.63 | 0.13 | 70 | 0 | 19.8 | 0.3 | 2,010,000 | 193 |
| Embodiment 9 | 10 | 0.016 | 2.63 | 0.39 | 70 | 0 | 10.5 | 0.2 | 2,360,000 | 140 |
| Embodiment 10 | 3 | 0.016 | 7.88 | 0.13 | 70 | 0 | 8.3 | 1.6 | 1,119,000 | 123 |
| Embodiment 11 | 10 | 0.016 | 2.63 | 0.39 | 50 | 0 | 4.2 | 0.2 | 2,360,000 | 106 |
| Embodiment 12 | 10 | 0.016 | 2.63 | 0.39 | 30 | 0 | 0.9 | 0.002 | 3,980,000 | 63 |
| Embodiment 13 | 32 | 0.016 | 2.63 | 0.39 | 70 | 0 | 30.8 | 0.5 | 1,870,000 | 332 |
| Comparative Example 1 | 10 | 0.016 | 7.88 | 0.13 | 70 | 20 | 33.1 | 28 | 830,000 | 350 |

(continued)

| Classification | Propylene (bar) | Ti (mmol) | Al (mmol) | Si (mmol) | Polymerization temperature (°C) | hydrogen (ml) | Catalyst Activity (kg/gCat) | MI(g/10min (230°C, 21.6 kg)) | Mv (g/mol) | Average particle diameter ($\mu$m) |
|---|---|---|---|---|---|---|---|---|---|---|
| Comparative Example 2 | 10 | 0.016 | 7.88 | 0.13 | 70 | 80 | 45.3 | 403 | 650,000 | 425 |
| Comparative Example 3 | 10 | 0.016 | 0.09 | 0.13 | 70 | 0 | 0.1 | 17.3(2.16kg) | 103,000 | 33 |
| Comparalive Example 4 | 10 | 0.016 | 11.1 | 0.13 | 70 | 0 | 19.3 | 4.2 | 965,000 | 191 |
| Comparative Example 5 | 10 | 0.016 | 15.2 | 0.13 | 70 | 0 | 19.4 | 5.8 | 921,000 | 191 |
| Comparative Example 6 | 10 | 0.016 | 2.63 | 0.013 | to | 0 | 29.2 | 12.1 | 880,000 | 332 |
| Comparative Example 7 | 10 | 0.016 | 2.63 | 0.66 | 70 | 0 | 5.2 | 3.9 | 972,000 | 113 |

Referring to Table 1 above, the MI and the viscosity average molecular weight of the ultra-high molecular weight polypropylene were confirmed according to the input ratio of the main catalyst, the co-catalyst, and the promoter according to an embodiment of the present invention, and it was confirmed that as the ratio of the co-catalyst was decreased and the ratio of the promoter was increased, a polypropylene with a higher molecular weight may be obtained. Likewise, it can be confirmed that catalyst residues may be removed depending on the amount of resin, polar organic solvent, and water used during the catalyst residue removal process according to an embodiment of the present invention, and it can also be confirmed that the particle diameter of the produced polypropylene resin may be controlled by adjusting the degree of polymerization.

More specifically, from Embodiments 1 and 2 and Comparative Examples 3 to 5, it may be confirmed that when Al in the co-catalyst, which is the alkyl aluminum compound, is contained in 10 to 500 moles with respect to 1 mole of Ti in the main catalyst, which is the titanium compound, it is possible to produce an ultra-high molecular weight polypropylene resin having a viscosity average molecular weight of 1,000,000 g/mol or greater in which the particle diameter of the resin is controlled. Likewise, from Embodiments 2 and 3 and Comparative Examples 6 and 7, it may be confirmed that when Si in the promoter, which is the silicon compound, is contained in 1 to 40 moles with respect to 1 mole of Ti in the main catalyst, which is the titanium compound, it is possible to produce an ultra-high molecular weight polypropylene resin having a viscosity average molecular weight of 1,000,000 g/mol or greater in which the particle diameter of the resin is controlled.

When comparing the results of producing the ultra-high molecular weight polypropylene according to an embodiment of the present invention, as the results of introducing different co-catalysts as in Embodiments 1, 4, and 7 or Embodiments 2, 5, and 8 under the same polymerization process conditions, it can be confirmed that the molecular weight can be controlled depending on the molecular structure (molecular weight) of the co-catalyst. In addition to controlling the molecular weight by hydrogen as disclosed in Comparative Examples 1 and 2, it can be confirmed that the viscosity average molecular weight of the ultra-high molecular weight polypropylene is controlled from 1,000,000 g/mol or greater to 4,000,000 g/mol depending on an added amount of the co-catalyst, an added amount of the promoter, etc.

In addition, from Embodiments 1, 12, and 13, it can be confirmed that when the polymerization pressure in the production of the ultra-high molecular weight polypropylene of the present invention is 1 to 40 bar, it is possible to produce an ultra-high molecular weight polypropylene resin having a viscosity average molecular weight of 1,000,000 g/mol or greater in which the particle diameter of the resin is controlled.

In addition, from Embodiments 3, 11, and 12, it can be confirmed that when the polymerization temperature in the production of the ultra-high molecular weight polypropylene of the present invention is 30 to 90°C, it is possible to produce an ultra-high molecular weight polypropylene resin having a viscosity average molecular weight of 1,000,000 g/mol or greater in which the particle diameter of the resin is controlled.

According to the method for producing the ultra-high molecular weight polypropylene of the present invention as described above, there is the effect that the molecular weight regulation for producing an ultra-high molecular weight propylene can be achieved with an input ratio of a main catalyst, a co-catalyst and a promoter even if hydrogen used as a molecular weight regulator in general polymerization conditions is not added.

## <Experimental Example 2> Catalyst residue removal process of ultra-high molecular weight polypropylene resin

### Embodiment 14.

The resin produced in Embodiment 2 of [Table 1] was used. After opening the 2 L stainless steel reactor equipped with a stirrer, 50 g of an ultra-high molecular weight polypropylene resin was added. A reactor was vacuumed at room temperature, injected with 900 ml of hexane as an organic solvent, and then stirred. 5 g of methanol as a polar organic solvent was added thereto and stirred for 10 minutes. Thereafter, 200 ml of distilled water was added and stirred for additional 10 minutes. After stirring was completed, a powdered ultra-high molecular weight polypropylene resin, and a liquid component mixed with hexane, polar organic solvent, and water were separated through filter paper. The separated resin was sufficiently dried in a dryer at 100°C and then the ash content was analyzed.

### Embodiment 15.

Embodiment 15 was performed in the same manner as Embodiment 14 except that the amount of methanol added was increased from 5 g to 25 g.

### Embodiment 16.

Embodiment 16 was performed in the same manner as Embodiment 14 except that the amount of methanol

added was increased from 5 g to 50 g.

Embodiment 17.

Embodiment 17 was performed in the same manner as Embodiment 14 except that the amount of methanol added was increased from 5 g to 150 g.

Embodiment 18.

Embodiment 18 was performed in the same manner as Embodiment 16 except that the amount of distilled water added was increased from 200 ml to 1000 ml.

Embodiment 19

Embodiment 19 was performed in the same manner as Embodiment 15 except that the stirring time was increased from 10 minutes to 1 hour.

Comparative Example 8.

Comparative Example 8 was performed in the same manner as Embodiment 16 except that the amount of distilled water added was decreased from 200 ml to 40 ml.

Comparative Example 9.

Comparative Example 9 was performed in the same manner as Embodiment 16 except that the amount of distilled water added was increased from 200 ml to 2000 ml.

Comparative Example 10.

The Ash analysis results of the resin produced according to Embodiment 2 in [Table 1] were shown.

Comparative Example 11.

Comparative Example 11 was performed in the same manner as Embodiment 14 except that the amount of methanol added was decreased from 5 g to 3 g.

Comparative Example 12.

Comparative Example 12 was performed in the same manner as Embodiment 14 except that the amount of methanol added was increased from 5 g to 550 g and the amount of distilled water added was increased from 200 ml to 1000 ml.

Comparative Example 13.

Comparative Example 13 was performed in the same manner as Comparative Example 11 except that the stirring time was increased from 10 minutes to 1 hour.

Results of measuring inorganic content of ultra-high molecular weight polypropylene resin

The Ash components of the ultra-high molecular weight polypropylene resins produced according to each control condition of the catalyst residue removal process of the present invention and Embodiments 14 to 19 and Comparative Examples 8 to 13 were analyzed, and the results of measuring the inorganic contents were shown in Table 2 below.

[Table 2]

| Classification | Polypropylene (g) | Hexane (ml) | Methanol (g) | Distilled water (ml) | Stirring time after adding methanol (min) | Ash (ppm) |
|---|---|---|---|---|---|---|
| Embodiment 14 | 50 | 900 | 5 | 200 | 10 | 28 |
| Embodiment 15 | 50 | 900 | 25 | 200 | 10 | 22 |
| Embodiment 16 | 50 | 900 | 50 | 200 | 10 | 13 |
| Embodiment 17 | 50 | 900 | 150 | 200 | 10 | 18 |
| Embodiment 18 | 50 | 900 | 50 | 1,000 | 10 | 24 |
| Embodiment 19 | 50 | 900 | 25 | 200 | 60 | 18 |
| Comparative Example 8 | 50 | 900 | 50 | 40 | 10 | 33 |
| Comparative Example 9 | 50 | 900 | 50 | 2,000 | 10 | 35 |
| Comparative Example 10 | 50 | - | - | - | - | 35 |
| Comparative Example 11 | 50 | 900 | 3 | 200 | 10 | 33 |
| Comparative Example 12 | 50 | 900 | 550 | 1,000 | 10 | 34 |
| Comparative Example 13 | 50 | 900 | 3 | 200 | 60 | 32 |

Referring to Table 2, it can be confirmed that in the catalyst residue removal process according to the present invention, an ultra-high molecular weight polypropylene resin having an inorganic content of 30 ppm or less can be obtained by mixing the polar organic solvent (x) with the produced ultra-high molecular weight polypropylene, and then separating, purifying, and drying the mixture using distilled water (y) or filtered water (y').

Meanwhile, the ultra-high molecular weight polypropylene resin according to Comparative Example 10 refers to a resin without performing a separate catalyst residue removal process.

In particular, from the ultra-high molecular weight polypropylene resins according to Embodiments 14 to 17 and Comparative Examples 11 and 12, it can be confirmed that when mixing 10 to 1000 parts by weight of the polar organic solvent (x) with respect to 100 parts by weight of the ultra-high molecular weight polypropylene, the inorganic content of the ultra-high molecular weight polypropylene is maintained at a level of 30 ppm or less.

In particular, from the ultra-high molecular weight polypropylene resins according to Embodiments 16 and 18 and Comparative Examples 8 and 9, it can be confirmed that when mixing 100 to 3000 parts by weight of distilled water (y) or filtered water (y') with respect to 100 parts by weight of the polar organic solvent (x), the inorganic content of the ultra-high molecular weight polypropylene is maintained at a level of 30 ppm or less.

In addition, from the ultra-high molecular weight polypropylene resins according to Embodiments 15 and 19, it can be confirmed that when the stirring time after adding methanol is 10 to 60 minutes, the inorganic content of the ultra-high molecular weight polypropylene is maintained at a level of 30 ppm or less.

According to the method for producing the ultra-high molecular weight polypropylene of the present invention as described above, there is the effect that the molecular weight regulation for producing an ultra-high molecular weight propylene can be achieved with an input ratio of a main catalyst, a co-catalyst and a promoter even if hydrogen used as a molecular weight regulator in general polymerization conditions is not added.

In addition, the ultra-high molecular weight polypropylene produced according to the present invention contains

a lower level of inorganic materials than polypropylene resins generally produced through a catalyst residue removal process to have physical properties suitable for secondary battery separators and uses requiring insulation.

In addition, according to the method for producing the ultra-high molecular weight polypropylene of the present invention, it is possible to produce an ultra-high molecular weight polypropylene separator having excellent performance and a heterogeneous separator of ultra-high molecular weight polyethylene and ultra-high molecular weight polypropylene by improving the kneading property and melting rate with the ultra-high molecular weight polyethylene used in secondary battery separators through particle diameter control.

The above description just illustrates the technical spirit of the present invention and various changes and modifications can be made by those skilled in the art to which the present invention pertains without departing from an essential characteristic of the present invention.

Therefore, the embodiments disclosed in the present invention are intended not to limit the technical spirit of the present invention but to describe the present invention and the scope of the technical spirit of the present invention is not limited by these embodiments. The protective scope of the present invention should be construed on the basis of the appended claims, and all the technical ideas in the equivalent scope thereof should be construed as falling within the scope of the present invention.

## Industrial Applicability

According to the present invention, there is the effect that the molecular weight control for producing an ultra-high molecular weight propylene can be achieved with an input ratio of a main catalyst, a co-catalyst and a promoter even if hydrogen used as a molecular weight regulator in general polymerization conditions is not added.

In addition, the ultra-high molecular weight polypropylene produced according to the present invention contains a lower level of inorganic materials than polypropylene resins generally produced through a catalyst residue removal process to have physical properties suitable for secondary battery separators and uses requiring insulation.

In addition, according to the present invention, it is possible to produce an ultra-high molecular weight polypropylene separator having excellent performance and a heterogeneous separator of ultra-high molecular weight polyethylene and ultra-high molecular weight polypropylene by improving the kneading property and melting rate with the ultra-high molecular weight polyethylene used in secondary battery separators through particle diameter control.

## Claims

1. A method for producing an ultra-high molecular weight polypropylene, comprising:

    mixing and adding a main catalyst which is a titanium compound, a co-catalyst which is an alkyl aluminum compound, and a promoter which is a silicon compound in a presence of a hydrocarbon solvent containing 1 to 20 carbon atoms without adding hydrogen as a molecular weight regulator; and
    adding a propylene monomer to the mixed solution and performing a polymerization reaction,
    wherein the ultra-high molecular weight polypropylene has a viscosity average molecular weight of 1,000,000 g/mol or greater.

2. The method for producing the ultra-high molecular weight polypropylene of claim 1,
wherein Al in the co-catalyst which is the alkyl aluminum compound is included in 10 to 500 moles with respect to 1 mole of Ti in the main catalyst which is the titanium compound.

3. The method for producing the ultra-high molecular weight polypropylene of claim 1,
wherein Si in the promoter, which is the silicon compound, is included in 1 to 40 moles with respect to 1 mole of Ti in the main catalyst, which is the titanium compound.

4. The method for producing the ultra-high molecular weight polypropylene of claim 1,
wherein a temperature of the polymerization reaction is 30 to 90°C.

5. The method for producing the ultra-high molecular weight polypropylene of claim 1,
wherein a pressure of the polymerization reaction is 1 to 40 bar.

6. The method for producing the ultra-high molecular weight polypropylene of claim 1, further comprising:
mixing a polar organic solvent (x) with the produced ultra-high molecular weight polypropylene, and separating, purifying and drying the mixture using distilled water (y) or filtered water (y'), in order to remove catalyst residues

in the produced ultra-high molecular weight polypropylene.

**7.** The method for producing the ultra-high molecular weight polypropylene of claim 6,

wherein the polar organic solvent (x) is any one or more compounds selected from a group consisting of a compound of Chemical Formula (4) below and a compound of Chemical Formula (5) below:

R-OH Chemical Formula (4)

HO-R1-R2-OH Chemical Formula (5)

(in Chemical Formula (4) above, R is a linear or branched alkyl group having 1 to 12 carbon atoms, and in Chemical Formula (5) above, R1 and R2 are linear alkyl groups having 1 to 6 carbon atoms.).

**8.** The method for producing the ultra-high molecular weight polypropylene of claim 7,
wherein Chemical Formula (4) is any one or more compounds selected from a group consisting of methanol, ethanol, propanol, butanol, pentanol, hexanol, heptanol, octanol, nonanol, decanol, undecanol, dodecanol, and branched alkyl groups such as isopropanol, isobutanol, and isopentanol.

**9.** The method for producing the ultra-high molecular weight polypropylene of claim 7,
wherein the Chemical Formula (5) is any one or more compounds selected from a group consisting of methanediol, ethanediol, propanediol, butanediol, pentanediol, hexanediol, heptanediol, octanediol, nonanediol, decanediol, undecanediol, and dodecanediol.

**10.** The method for producing the ultra-high molecular weight polypropylene of claim 6,
wherein 10 to 1000 parts by weight of the polar organic solvent (x) is mixed with respect to 100 parts by weight of the produced ultra-high molecular weight polypropylene.

**11.** The method for producing the ultra-high molecular weight polypropylene of claim 6,
wherein 100 to 3000 parts by weight of the distilled water (y) or filtered water (y') is used with respect to 100 parts by weight of the polar organic solvent (x).

**12.** An ultra-high molecular weight polypropylene produced according to the producing method of any one of claims 1 to 11 and having a viscosity average molecular weight of 1,000,000 g/mol or greater,

an inorganic content of 1 to 30 ppm, and
a particle diameter of 10 to 400 $\mu$m.

**13.** The ultra-high molecular weight polypropylene of claim 12,
wherein the viscosity average molecular weight is 1,000,000 to 4,000,000 g/mol.

## INTERNATIONAL SEARCH REPORT

International application No. **PCT/KR2022/018009**

**A. CLASSIFICATION OF SUBJECT MATTER**

**C08F 110/06**(2006.01)i; **C08F 4/659**(2006.01)i; **C08F 4/646**(2006.01)i

According to International Patent Classification (IPC) or to both national classification and IPC

**B. FIELDS SEARCHED**

Minimum documentation searched (classification system followed by classification symbols)

C08F 110/06(2006.01); C08F 10/02(2006.01); C08F 10/06(2006.01); C08F 2/01(2006.01); C08F 210/06(2006.01); C08F 4/646(2006.01); C08L 23/10(2006.01); H01M 50/409(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 초고분자량 폴리프로필렌(ultra high molecular weight polypropylene), 티타늄 화합물(titanium compound), 알킬알루미늄 화합물(alkyl aluminum compound), 실리콘 화합물(silicone compound)

**C. DOCUMENTS CONSIDERED TO BE RELEVANT**

| Category* | Citation of document, with indication, where appropriate, of the relevant passages | Relevant to claim No. |
|---|---|---|
| X | JP 4889483 B2 (PRIME POLYMER CO., LTD.) 07 March 2012 (2012-03-07)<br>See claims 1 and 7; paragraphs [0011]-[0055]; and manufacturing example 1. | 1-13 |
| A | JP 2021-034260 A (TORAY IND. INC. et al.) 01 March 2021 (2021-03-01)<br>See entire document. | 1-13 |
| A | KR 10-0503136 B1 (MITSUI CHEMICALS, INC.) 25 July 2005 (2005-07-25)<br>See entire document. | 1-13 |
| A | KR 10-2021-0067559 A (LOTTE CHEMICAL CORPORATION) 08 June 2021 (2021-06-08)<br>See entire document. | 1-13 |
| A | KR 10-2011-0108172 A (KOREA PETROCHEMICAL IND. CO., LTD.) 05 October 2011 (2011-10-05)<br>See entire document. | 1-13 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 March 2023** | **08 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2022/018009**

**C. DOCUMENTS CONSIDERED TO BE RELEVANT**

| Category* | Citation of document, with indication, where appropriate, of the relevant passages | Relevant to claim No. |
|---|---|---|
| PX | KR 10-2415349 B1 (KOREA PETROCHEMICAL IND. CO., LTD.) 01 July 2022 (2022-07-01)<br>See entire document.<br>※ This document is the published patent of a priority application of the present internati onal application. | 1-13 |

Form PCT/ISA/210 (second sheet) (July 2022)

**INTERNATIONAL SEARCH REPORT**
**Information on patent family members**

International application No.
**PCT/KR2022/018009**

| Patent document cited in search report | Publication date (day/month/year) | Patent family member(s) | Publication date (day/month/year) |
|---|---|---|---|
| JP 4889483 B2 | 07 March 2012 | CN 100972973 A | 30 May 2007 |
| | | EP 1731538 A1 | 13 December 2006 |
| | | EP 1731538 A4 | 04 June 2008 |
| | | EP 1731538 B1 | 19 June 2013 |
| | | JP 2008-097842 A1 | 28 February 2008 |
| | | KR 10-1140043 B1 | 02 May 2012 |
| | | KR 10-2007-0030768 A | 16 March 2007 |
| | | US 2007-0208138 A1 | 06 September 2007 |
| | | US 7732532 B2 | 08 June 2010 |
| | | WO 2005-097842 A1 | 20 October 2005 |
| JP 2021-034260 A | 01 March 2021 | None | |
| KR 10-0503136 B1 | 25 July 2005 | CN 100241196 A | 12 January 2000 |
| | | EP 0942013 A1 | 15 September 1999 |
| | | EP 0942013 A4 | 27 December 2000 |
| | | EP 0942013 B1 | 04 February 2004 |
| | | JP 2000-007752 A1 | 15 February 2000 |
| | | JP 4083820 B2 | 30 April 2008 |
| | | KR 10-2000-0068700 A | 25 November 2000 |
| | | US 6350828 B1 | 26 February 2002 |
| | | WO 99-07752 A1 | 18 February 1999 |
| KR 10-2021-0067559 A | 08 June 2021 | None | |
| KR 10-2011-0108172 A | 05 October 2011 | KR 10-1161752 B1 | 02 July 2012 |
| KR 10-2415349 B1 | 01 July 2022 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3157966 B1
- US 8008417 B